(19) Europäisches Patentamt

European Patent Office

Office européen des brevets

(11) EP 0 751 485 A1

(12) **DEMANDE DE BREVET EUROPEEN**

(43) Date de publication:
02.01.1997 Bulletin 1997/01

(51) Int Cl.⁶: **G06T 11/00**

(21) Numéro de dépôt: 96401424.5

(22) Date de dépôt: 27.06.1996

(84) Etats contractants désignés:
**DE FR GB NL**

(30) Priorité: **30.06.1995 FR 9507921**

(71) Demandeur: **COMMISSARIAT A L'ENERGIE ATOMIQUE**
**75015 Paris (FR)**

(72) Inventeurs:
• **Sire, Pascal**
**38360 Sassenage (FR)**
• **Grangeat, Pierre**
**38330 Saint Ismier (FR)**

(74) Mandataire: **Dubois-Chabert, Guy et al**
**c/o BREVATOME**
**25, rue de Ponthieu**
**75008 Paris (FR)**

(54) **Procédé de réalisation d'un conformateur de flux pour acquérir des images en transmission d un objet**

(57) La présente invention conceme un procédé de réalisation d'un conformateur de flux pour acquérir des images en transmission d'un objet, procédé robuste aux variations de forme et/ou d'atténuation de l'objet, dans lequel la forme et/ou l'atténuation de l'objet est décrite par un modèle paramétrique et les caractéristiques du conformateur sont calculées à partir du profil complémentaire à un profil moyen obtenu soit en faisant la moyenne des profils suivant différentes incidences angulaires du modèle, soit en faisant la moyenne des profils obtenus suivant différentes incidences angulaires sur une famille de modèles de formes et/ou d'atténuations différentes.

FIG. 3

## Description

Domaine technique

La présente invention concerne un procédé de réalisation d'un conformateur de flux pour acquérir des images en transmission d'un objet.

Le domaine d'application de l'invention est celui de l'imagerie médicale et du contrôle industriel, et plus précisément celui de la tomographie d'atténuation.

Etat de la technique antérieure

Dans le domaine de l'imagerie en transmission, une source externe de rayonnement X (générateur à rayons X) ou gamma (source gamma) peut être utilisée avec un détecteur adapté à l'énergie du rayonnement et à la géométrie d'acquisition (détecteurs monodimensionnels, écran convertisseur ou tube intensificateur de lumière et caméra CCD, ou encore gamma caméra pour les détecteurs bidimensionnels). Le patient, ou la pièce industrielle à examiner, est placée entre la source et le détecteur. Selon l'application c'est la pièce qui tourne dans le champ de mesure, ou bien l'ensemble source-détecteur qui tourne autour du patient. A chaque incidence le détecteur mesure une image de la transmission du rayonnement à travers la pièce ou le patient. L'ensemble des images acquises permet ensuite de reconstruire la cartographie d'atténuation de l'objet examiné. On parle alors d'imagerie structurelle car elle fournit une image sur la structure de l'objet.

Le domaine de l'invention est également celui de la médecine nucléaire par tomographie d'émission simple photon corrigée en atténuation, encore appelé "Single Photon Emission Computed Tomography" (SPECT). L'imagerie SPECT permet de calculer la cartographie d'émission d'une molécule marquée par un traceur radioactif injectée à un patient. Cette technique permet de suivre la molécule dans le corps et de ce fait de suivre in-vivo le fonctionnement et le métabolisme de l'organe sur lequel elle se fixe. On parle alors d'imagerie fonctionnelle car elle fournit une image du fonctionnement d'un organe. Une méthode de correction consiste à calculer la carte d'atténuation du patient

Dans le cas de l'acquisition de mesures de transmission appliquées à la correction en atténuation des mesures d'émission en imagerie SPECT, un système de tomographie d'émission simple photon est constitué d'un ou plusieurs détecteurs (i.e., gamma caméra) qui reçoivent le rayonnement gamma émis par le traceur radioactif injecté au patient. Un collimateur secondaire placé sur chacune des gamma caméras définit la géométrie d'acquisition. Les photons émis par le traceur dans une direction autre que celle définie par le collimateur sont arrêtés. La géométrie est dite "conique" si les trous du collimateur convergent tous vers un même point. ; la géométrie est dite en "éventail" si les trous convergent suivant des plans parallèles vers une ligne droite: la géométrie est en "éventail axial" si cette ligne droite est parallèle à l'axe de rotation et en "éventail radial" si cette ligne droite est perpendiculaire à l'axe de rotation. La géométrie d'acquisition est dite "parallèle" si les trous sont parallèles.

Une série d'acquisitions est faite suivant différentes incidences du patient. Une étape de reconstruction permet ensuite de calculer la cartographie d'émission du traceur. L'atténuation du patient perturbe les mesures d'émission (i. e., une partie du rayonnement est absorbée par les tissus), ce qui provoque des artefacts après reconstruction. Il devient alors nécessaire de corriger cette atténuation pour obtenir des images quantitatives de bonne qualité.

Une solution est de corriger les mesures d'émission à partir d'une cartographie de l'atténuation du patient au moyen de mesures de transmission et d'en tenir compte à la reconstruction. Cette cartographie peut être fournie par un scanner à rayons X annexe, ou reconstruite à partir de mesures de transmission acquises en même temps que les mesures d'émission en utilisant une source de transmission montée sur la gamma caméra. Cette dernière solution évite d'avoir à utiliser un scanner à rayons X pour obtenir la carte d'atténuation, ce qui évite les problèmes de recalage des deux examens tout en étant beaucoup plus économique. La géométrie de cette source est adaptée à celle du collimateur secondaire à savoir plane pour un collimateur parallèle, ligne pour un collimateur éventail, ou ponctuelle pour un collimateur conique. Une source ligne défilante équivalent à un plan source est généralement proposée pour une géométrie parallèle.

Les acquisitions de transmission et d'émission peuvent se faire simultanément ou successivement selon la géométrie d'acquisition et les énergies des radio-isotopes utilisés.

La dynamique de comptage d'une gamma caméra est limitée, ce qui pénalise les mesures de transmission. Les pertes de comptage augmentent rapidement à partir d'un certain niveau de comptage. Les taux de comptage maximum d'une gamma caméra sont généralement limités à quelques centaines de millier de coups par seconde, voir quelques millions pour les futures caméras numériques. Toutefois, les pertes à de tels taux de comptage sont très importantes et souvent supérieures à un facteur 3. De telles pertes de comptage sont inacceptables en tomographie, surtout si les acquisitions en transmission sont effectuées simultanément aux acquisitions d'émission. La statistique des mesures d'émission est généralement très faible, ce qui interdit la moindre perte de sensibilité supplémentaire. Ces pertes de comptage conduisent également à une surestimation de l'atténuation principalement sur les bords de l'objet. Il faut donc se limiter dans la pratique à des taux de comptage beaucoup plus modestes, de l'ordre de quelques dizaines de millier de coups par seconde avec une perte de comptage inférieure au pour cent. De tels taux de comptage sont compatibles avec les taux d'émission des examens de médecine nucléaire, mais sont insuffisants pour effectuer correctement les mesures de transmission sur un patient, notamment dans le cas d'examens cardiaques où la dynamique d'atténuation est généralement supérieure à 100. En effet l'activité de la source est calculée pour obtenir une certaine statistique sur les mesures de transmission suivant la direction d'atténuation maximale (i.e., épaisseur maximale du patient). Dans ce cas l'activité maximale acceptable est directement fonction du taux de comptage limite admissible pour la gamma caméra. Ceci pose de sérieux problèmes de comptage lorsque le patient est placé suivant une incidence de moindre atténuation, ou plus encore lorsque la source est une source ligne défilante (i.e., géométrie parallèle) que l'on déplace transversalement au patient et qu'elle irradie les bords du patient.

Le problème est similaire en tomographie d'atténuation où l'on observe cette fois une saturation du détecteur en dehors de l'objet. Il peut être même indispensable de limiter la dynamique d'atténuation pour garder une bonne sensibilité au centre de l'objet sans risquer de saturer le détecteur sur les bords (i.e., par exemple si l'on utilise un tube intensificateur comme détecteur bidimensionnel).

Ainsi l'atténuation du patient perturbe les mesures d'émission, ce qui provoque des artefacts après reconstruction. Pour obtenir des images quantitatives de bonne qualité, il faut corriger cette atténuation en utilisant une cartographie de l'atténuation reconstruite à partir de mesures de transmission. Or, à partir d'un certain niveau de comptage, ces mesures de transmission sont dégradés par des pertes de comptage qui induisent une perte de sensibilité conduisant à une surestimation de l'atténuation, en particulier en périphérie de l'objet.

Une solution simple pour limiter les pertes de comptage consiste à placer un filtre adaptatif appelé conformateur de flux devant la source. L'atténuation du filtre est alors adaptée à l'atténuation du patient, c'est-à-dire au taux de comptage de la caméra. La correction d'atténuation en imagerie d'émission étant une technique très nouvelle, on ne trouve pas dans la littérature de solution originale pour résoudre ce problème de dynamique de mesure.

L'utilisation de conformateurs de flux est très largement utilisées en radiothérapie pour le traitement des tumeurs cancéreuses. L'objectif est de créer un profil de flux variable suivant la position de l'irradiateur autour du patient afin que le contribution de chacune des irradiations permette d'irradier au mieux la zone malade tout en préservant les tissus sains. On retrouve également cette notion de conformateur en imagerie par résonance nucléaire où cette fois des structures magnétiques sont utilisées pour produire un champ magnétique uniforme au niveau du champ de mesure.

Pour palier ces différents inconvénients des dispositifs de l'art connu, l'invention a pour objet de limiter la dynamique des mesures d'atténuation afin d'éviter la saturation du détecteur ou de réduire les taux de comptage de la caméra sur les bords de l'objet.

Exposé de l'invention

La présente invention concerne un procédé de réalisation d'un conformateur de flux pour acquérir des images en transmission d'un objet, procédé robuste aux variations de forme et/ou d'atténuation de l'objet, caractérisé en ce que la forme et/ou l'atténuation de l'objet est décrite par un modèle paramétrique (par exemple un ellipsoïde) qui est un modèle numérique ou physique (acquisition d'un objet étalon) et en ce que les caractéristiques du conformateur sont calculées à partir du profil complémentaire à un profil moyen obtenu soit en faisant la moyenne des profils suivant différentes incidences angulaires du modèle, soit en faisant la moyenne des profils obtenus suivant différentes incidences angulaires sur une famille de modèles de formes et/ou d'atténuations différentes.

On peut calculer les caractéristiques du conformateur en tout point $i$ de tout ou partie du profil par la relation $\mu_i x_i = \ln(\phi_i / \phi_{min})$ ; $\mu_i$ étant le coefficient linéaire d'atténuation du conformateur, $x_i$ l'épaisseur du conformateur, $\phi_i$ la valeur du flux transmis à travers l'objet et $\phi_{min}$ la valeur minimale du flux $\phi_i$ émis par la source ;

Le profil de flux complémentaire est tel que, superposé au profil d'acquisition, le profil de flux résultant est uniforme.

Cette invention décrit donc un procédé de création de profil de flux permettant l'acquisition de mesures de transmission en tomographie d'atténuation ou la correction en atténuation des mesures d'émission en imagerie SPECT.

Pour l'obtention d'un conformateur le procédé de l'invention peut comporter les étapes suivantes :

- dans un premier mode, dans le cas où on fait une acquisition d'un objet selon plusieurs incidences :

  • acquisition des mesures de flux de transmission pour chaque position de l'objet, par un détecteur et obtention de profils de transmission de l'objet pour chaque angle d'incidence,
  • calcul du profil moyen comme moyenne des profils des différentes incidences,
  • calcul du conformateur comme le complémentaire par rapport à ce profil moyen selon le procédé de l'invention,
  • mise en place du conformateur,
  • acquisition des images en transmission du corps à travers le conformateur ;

- dans un second mode, dans le cas où on fait une acquisition d'un objet selon plusieurs incidences :

  - acquisition des mesures de flux de transmission pour chaque position de l'objet, par un détecteur et obtention de profils de transmission de l'objet pour chaque angle d'incidence,
  - calcul des conformateurs relatifs à chacun des profils de chaque incidence,
  - calcul de la moyenne des profils de conformateurs et obtention du conformateur moyen,
  - mise en place du conformateur,
  - acquisition des images en transmission du corps à travers le conformateur.

Pour l'obtention d'un conformateur variable parfaitement adapté à chacune des incidences, on supprime l'étape de calcul de la moyenne des profils de conformateurs et d'obtention du conformateur moyen. On place alors à chaque incidence le profil du conformateur correspondant.

Contrairement au procédé de l'invention :

- en imagerie SPECT avec correction de l'atténuation, les pertes de comptage de la caméra dégradent fortement les cartographies d'atténuation utilisées pour corriger les mesures d'émission ;
- en tomographie d'atténuation il y a saturation du détecteur en dehors de l'objet à mesurer;
- en radiothérapie le rôle d'un conformateur de flux est de créer un profil de flux variable suivant la position de l'irradiateur autour du patient afin que la contribution de chacune des irradiations permette de circonscrire la zone à irradier. Le conformateur est défini une bonne fois pour toutes et suivant une seule vue, contrairement au conformateur de l'invention qui est défini à partir de toutes les acquisitions ;
- en imagerie par résonance nucléaire, il y a une structure magnétique pour produire un champ magnétique uniforme au niveau du champ de mesure.

Avec le procédé de l'invention, sur l'ensemble des acquisitions, la statistique de comptage est constante en moyenne sur le détecteur. La dynamique d'atténuation et donc de mesure est réduite. En particulier si l'objet est à symétrie de révolution ou si le conformateur est variable, l'atténuation vue par le détecteur est constante.

Le domaine d'application de l'invention est celui des systèmes d'imagerie de transmission à rayons X ou $\gamma$, et plus particulièrement les systèmes de tomographie. Les applications peuvent être industrielles ou médicales. Comme application médicale, on peut citer les nouvelles gamma caméras disposant d'une source extérieure permettant l'acquisition de mesures de transmission pour la correction en atténuation des mesures d'émission, ou encore les nouveaux tomographes 3D (3 dimensions) utilisant un détecteur bidimensionnel à faible dynamique tel que l'amplificateur de brillance.

Brève description des dessins

- La figure 1 illustre un conformateur adapté à un cylindre de section droite circulaire en géométrie parallèle ;
- la figure 2 illustre les profils de l'atténuation moyenne avec conformateur en géométrie parallèle ;
- la figure 3 illustre un conformateur adapté à un cylindre homogène en géométrie convergente ;
- la figure 4 illustre la relation entre géométrie conique et géométrie en éventail ;
- la figure 5 illustre le réarrangement d'une géométrie en éventail en géométrie parallèle ;
- la figure 6 illustre les profils de l'atténuation moyenne avec conformateur en géométrie conique ;
- la figure 7 illustre le principe du conformateur statique pour source ligne défilante avec balayage axial ;
- la figure 8 illustre un ensemble source ligne défilante pour un balayage axial ;
- la figure 9 illustre le principe d'une source ligne défilante à profil d'activité variable pour balayage axial ;
- la figure 10 illustre le principe du conformateur dynamique pour source ligne défilante avec balayage radial ;
- la figure 11 illustre le profil du conformateur dynamique placé devant la source pour un objet elliptique ;
- la figure 12 illustre un profil d'un conformateur dynamique dont le balayage de la source correspond à une rotation du conformateur de 360 degrés, pour un objet elliptique ;
- la figure 13 illustre des profils de conformateurs dynamiques pour un objet elliptique dont le balayage de la source correspond à une rotation du conformateur de 180 degrés, celui de droite permettant une rotation continue ;
- la figure 14 illustre le principe d'un conformateur statique pour source point.

Exposé détaillé des modes de réalisation

L'objectif de la correction d'atténuation selon l'invention est de corriger les mesures d'émission de l'atténuation des photons dans les tissus. La méthode de correction utilisée consiste à établir une cartographie de l'atténuation et d'en tenir compte pour les mesures d'émission. Les mesures de transmission sont obtenues avec une source extérieure adaptée à la géométrie d'acquisition.

On appelle dynamique d'atténuation l'écart entre les deux valeurs extrêmes d'atténuation entre le détecteur et la source. La dynamique de mesures correspondante est l'écart entre le flux maximum et le flux minimum mesuré par le détecteur.

Dans le cas de la tomographie, on a une projection de l'objet par angle d'incidence considéré. Une projection s'exprime en fonction des flux par: projection = $\log(\phi_{0l} / \phi)$ ; $\phi_0$ étant déterminé avant de positionner l'objet à mesurer.

Le flux détecté par chaque point élémentaire du détecteur est fonction du coefficient d'atténuation et de l'épaisseur de l'objet considéré.

L'objectif de l'invention est de limiter la dynamique de comptage de la caméra en limitant la dynamique de transmission vue par la source. Pour cela on place un filtre devant la source de sorte à limiter le flux reçu par la caméra sur les bords du patient. Plus précisément, ce filtre appelé "conformateur" est calculé pour obtenir une atténuation moyenne sur l'ensemble des acquisitions qui soit constante sur tout le détecteur. C'est-à-dire que sur l'ensemble des acquisitions le nombre moyen de photons reçu par un pixel est constant sur tout le détecteur. Un conformateur ainsi défini permet d'obtenir une statistique uniforme après reconstruction.

Un calcul analytique du conformateur n'est généralement pas possible et une approche numérique à partir des mesures de transmission est nécessaire. Lorsque l'objet a une forme simple il est possible d'obtenir une expression analytique du conformateur. Par exemple, nous développons ce calcul dans le cas où le patient est modélisé par un cylindre homogène infini de base elliptique et centré sur l'axe de rotation. Soit $\mu$ le coefficient d'atténuation linéaire du cylindre. On note respectivement $l(p,\phi)$ et $conf(p)$ la longueur traversée à travers le patient et le profil du conformateur, $p$ étant l'abscisse sur le détecteur et $\phi$ l'angle d'incidence de l'acquisition. Le profil de l'atténuation moyenne du patient $a_{moy}(p)$ est:

$$a_{moy}(p) = \frac{1}{2\pi} \int_0^{2\pi} e^{-\mu\, l(p,\phi)} \cdot d\phi \qquad\qquad \textbf{(1)}$$

Par conséquent l'épaisseur moyenne traversée est :

$$l_{moy}(p) = \frac{-1}{\pi} \cdot \ln\left( \frac{2}{\pi} \int_0^{\pi/2} c^{-\mu . l(p,\phi)} \cdot d\phi \right) \qquad\qquad \textbf{(2)}$$

L'équation du conformateur adapté à l'atténuation moyenne du patient est donc :

$$conf(p) = \max\left( l_{moy}(p) \right) - I_{moy}(p) \qquad\qquad \textbf{(3)}$$

En raisonnant sur les flux transmis, l'expression **(3)** peut s'écrire sous la forme suivante :

$$conf(p) = \max\left( Ln\, \frac{\Phi_o(p)}{\overline{\Phi}(p)} - Ln\, \frac{\Phi_o(p)}{\Phi(p)} \right) = Ln\, \frac{\overline{\Phi}(p)}{\min\left( \overline{\Phi}(p) \right)} \quad \textbf{(3 bis)}$$

où $\overline{\Phi}(p)$ est le flux moyen reçu par la cellule p du détecteur,

$$\min\left( \overline{\Phi}(p) \right)$$

la valeur minimale du flux moyen reçu par une cellule du détecteur et $\Phi_o(p)$ le flux reçu par la cellule p après avoir retiré l'objet.

Les grandeurs moyennes utilisées traduisent le fait que l'on cherche le conformateur adapté à une incidence particulière de l'objet et bien entendu directement obtenu sans moyenne sur plusieurs incidences.

Les calculs sont conduits pour une géométrie parallèle puis pour une géométrie convergente (i.e., conique ou éventail). On présente ensuite une approche totalement numérique de calcul de ce conformateur dans le cas où l'objet ne peut plus être décrit par un formalisme analytique.

**Géométrie parallèle**

Dans le cas simple d'un patient à symétrie de révolution, le patient est modélisé par un cylindre homogène et infini de section droite circulaire. Soit r le rayon de ce cylindre. La projection du cylindre est indépendante de l'angle de rotation.

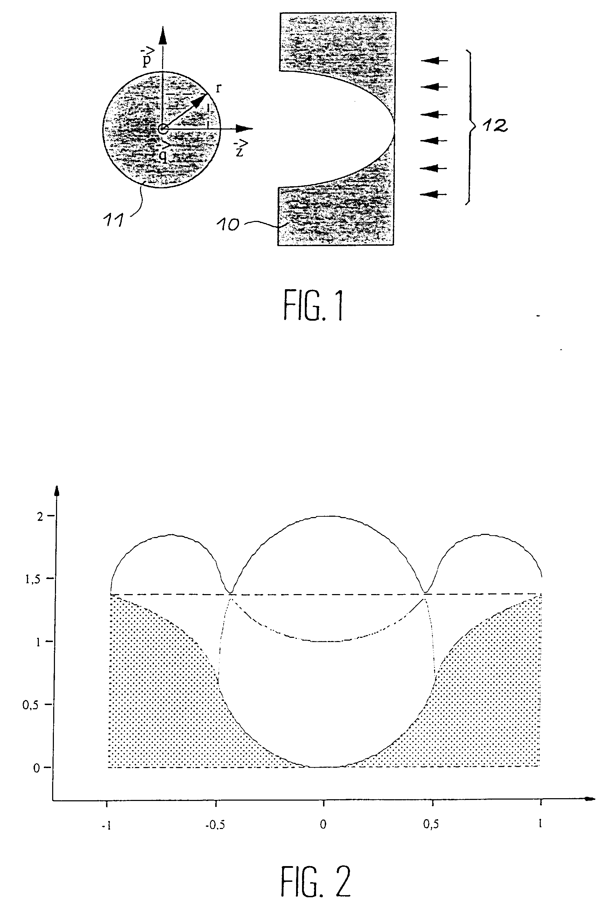

La figure 1 illustre un conformateur 10 adapté à un cylindre 11 de section droite circulaire en géométrie parallèle, avec un flux incident parallèle 12.

La projection du cercle est :

$$\begin{cases} l(p) = 2.r.\sqrt{1 - \dfrac{p^2}{r^2}} & si \ |p| \le r \\ l(p) = 0 & si \ |p| > r \end{cases} \tag{4}$$

L'expression du conformateur est donc :

$$\begin{cases} conf(p) = 2.r - l(p) = 2.r\left(1 - \sqrt{1 - \dfrac{p^2}{r^2}}\right) & si \ |p| \le r \\ conf(p) = 2.r & si \ |p| > r \end{cases} \tag{5}$$

Dans le cas réel l'objet n'est plus à symétrie de révolution. Si on note a et b les paramètres de l'ellipse, l'équation de cette ellipse est la suivante :

$$\left(\frac{x.\cos\phi + y.\sin\phi}{a}\right)^2 + \left(\frac{-x.\sin\phi + y.\cos\phi}{b}\right)^2 = 1 \tag{6}$$

ou encore :

$$y^2.\left(\frac{\sin^2\phi}{a^2} + \frac{\cos^2\phi}{b^2}\right) + 2y.x\cos\phi.\sin\phi.\left(\frac{1}{a^2} - \frac{1}{b^2}\right) + x^2.\left(\frac{\cos^2\phi}{a^2} + \frac{\sin^2\phi}{b^2}\right) - 1 = 0 \tag{7}$$

L'épaisseur traversée suivant la direction p et l'incidence $\phi$ est alors :

$$l(p,\phi) = |y_1 - y_2| \tag{8}$$

où $y_1$ et $y_2$ sont les racines de l'équation (7).

L'expression de l'épaisseur traversée devient

$$l(p,\phi) = \frac{\sqrt{p^2.\cos^2\phi.\sin^2\phi.\left(\frac{1}{a^2}-\frac{1}{b^2}\right)^2 + \left(\frac{\sin^2\phi}{a^2}+\frac{\cos^2\phi}{b^2}\right).\left(1-p^2.\left(\frac{\cos^2\phi}{a^2}+\frac{\sin^2\phi}{b^2}\right)\right)}}{\frac{\sin^2\phi}{a^2}+\frac{\cos^2\phi}{b^2}} \qquad (9)$$

L'atténuation correspondante puis l'épaisseur moyenne et enfin le conformateur sont respectivement obtenus en appliquant les formules (1) à (3). Il n'existe pas d'expression analytique et un calcul numérique s'impose. On remarque que si $a=b=r$ on retrouve l'expression obtenue précédemment pour un cercle.

Si le conformateur et le patient sont faits de matériaux différents (i.e., conformateur en cuivre par exemple) l'expression du conformateur doit être multipliée par le rapport $\mu_p/\mu_c$, où $\mu_p$ et $\mu_c$ sont respectivement les coefficients d'atténuation linéaire du patient et du conformateur.

Pour illustrer cette approche on présente ci-dessous à titre d'exemple la simulation d'un système d'imagerie cardiaque avec un détecteur rectangulaire grand champ de 50 x 40cm². La distance source-détecteur est fixée à 60cm. Le patient est modélisé par un cylindre elliptique de 40 cm x20 cm. Les calculs sont effectués avec des valeurs normalisées ; les paramètres de l'ellipse sont 1 cm et 0.5 cm et le coefficient d'atténuation linéaire à 122 kev (i.e., énergie du Cobalt 57) est $\mu = 20 \times 0.15 = 3$ cm$^{-1}$. La figure 2 montre les atténuations minimales (pointillés), moyennes (tiretés) et maximales (traits pleins), ainsi que le profil du conformateur (en grisé).

### Géométrie convergente

L'approche est semblable à celle présentée pour une géométrie parallèle. Le calcul des projections de l'objet est différent car il est nécessaire cette fois de prendre en compte la divergence du faisceau. On suppose toujours que le patient est un cylindre infini et homogène. On se place dans le cas d'une géométrie conique: la géométrie en éventail étant un cas particulier de la géométrie conique.

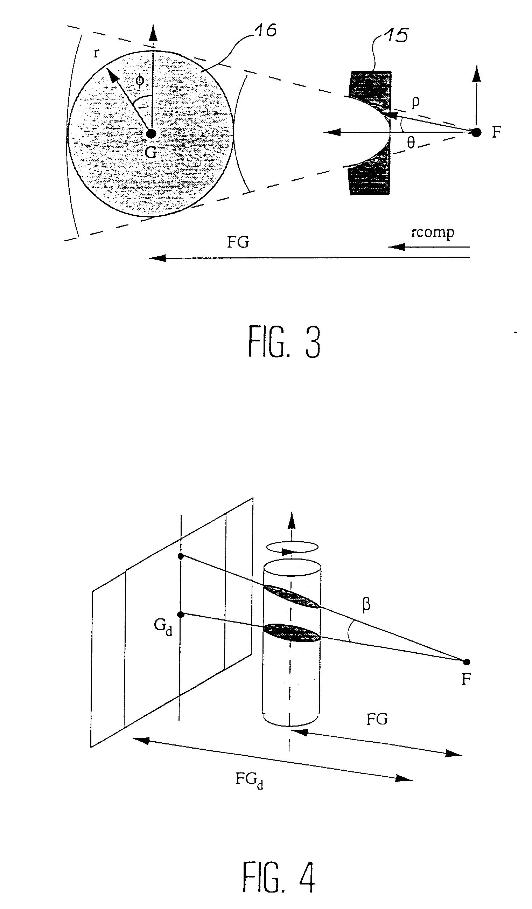

La figure 3 illustre un conformateur 15 adapté à un cylindre 16 homogène en géométrie convergente. $\theta$ et $\beta$ sont les ouvertures angulaires d'un pixel de la caméra suivant respectivement les colonnes et les lignes de la caméra. L'expression de la longueur traversée par un rayon $\gamma$ à travers le patient peut être décomposée en l'expression de la longueur traversée en géométrie éventail pondérée par un terme d'ouverture axiale.

$$l(\theta,\beta,\phi)_{conique} = \frac{1}{\cos\beta} . l(\theta,\phi)_{éventail} \qquad (10)$$

La figure 4 illustre la relation entre géométrie conique et géométrie en éventail.

Le réarrangement suivant exprime les projections en géométrie éventail en fonction des projections en géométrie parallèle :

$$l(\theta,\phi)_{éventail} = l(FG.\sin\theta,\phi+\theta)_{parallèle} \qquad (11)$$

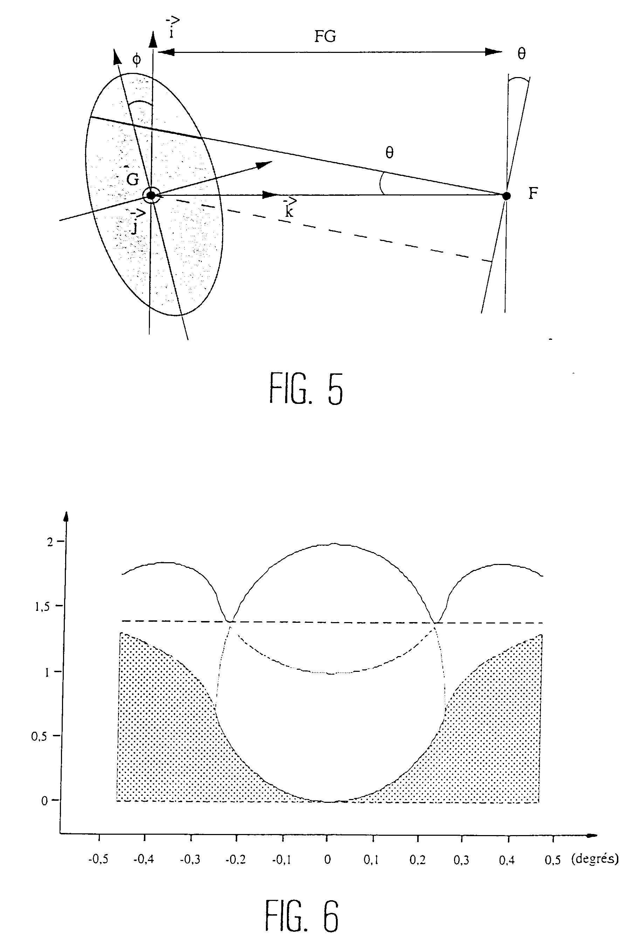

La figure 5 illustre le réarrangement d'une géométrie en éventail en géométrie parallèle.

L'expression de l'épaisseur traversée devient donc :

$$l(\theta,\beta,\phi)_{conique} = \frac{1}{\cos\beta} . l(FG.\sin\theta,\phi+\theta)_{parallèle} \qquad (12)$$

Dans l'hypothèse d'un cylindre homogène infini de section droite circulaire, l'expression du conformateur placé au point focal $F$ est la suivante. Cette expression est indépendante de la positon angulaire $\theta$ du patient.

$$conf(\theta,\beta) = \frac{2r}{\cos\beta} . \left(1 - \sqrt{1 - \left(\frac{FG.\sin\theta}{r}\right)^2}\right) \qquad (13)$$

En pratique le conformateur est toujours placé à une distance *rconf* de la source. L'expression du conformateur correspondant à un cylindre infini homogène de section droite circulaire devient donc :

$$conf(\theta,\beta) = \frac{2r}{\cos\beta} \cdot \left(1 - \left(\frac{FG.\sin\theta}{r}\right)^2\right) + \frac{rconf}{\cos\theta.\cos\beta} \qquad (14)$$

A partir des équations **(9)** et **(12)**, on obtient l'expression de l'épaisseur traversée par un rayon γ à travers un cylindre infini homogène de section droite elliptique.

$$(15)$$

$$l(\theta,\beta,\phi)_{conique} =$$

$$\frac{2}{\cos\beta} \cdot \frac{\sqrt{(FG.\sin\theta)^2 . \cos^2(\phi+\theta).\sin^2(\theta+\phi).\left(\frac{1}{a^2} - \frac{1}{b^2}\right)^2 + \left(\frac{\sin^2(\phi+\theta)}{a^2} + \frac{\cos^2(\phi+\theta)}{b^2}\right).\left(1 - (FG.\sin\theta)^2.\left(\frac{\cos^2(\phi+\theta)}{a^2} + \frac{\sin^2(\phi+\theta)}{b^2}\right)\right)}}{\frac{\sin^2(\phi+\theta)}{a^2} + \frac{\cos^2(\phi+\theta)}{b^2}}$$

où *a* et *b* sont les paramètres de l'ellipse.

L'atténuation correspondante puis l'épaisseur moyenne traversée et enfin le conformateur sont obtenus, comme en géométrie parallèle, par un calcul numérique en appliquant les formules **(1)** à **(3)**. On remarque que si $a = b = r$ on retrouve l'expression obtenue pour un cercle.

Si le conformateur et le patient sont faits de matériaux différents l'expression du conformateur doit être multipliée par le rapport des coefficients d'atténuation linéaire du patient et du conformateur.

Pour illustrer cette approche on présente ci-dessous à titre d'exemple la simulation d'un système d'imagerie cardiaque avec un détecteur rectangulaire grand champ de 50 x 40cm². La distance source-détecteur est fixée à 100cm. Le patient est modélisé par un cylindre elliptique de 40 cm x 20 cm. Les calculs sont effectués avec des valeurs normalisées : les paramètres de l'ellipse sont $a = 1$ cm et $b = 0.5$ cm, la distance source-détecteur est de 5 cm, la distance de la source à l'axe de rotation est de 4 cm et le coefficient d'atténuation linéaire à 122 kev (i.e., énergie du Cobalt 57) est $\mu = 20$ x $0.15 = 3$ cm$^{-1}$. La figure 6 suivante montre les atténuations minimales (pointillés), moyennes (tiretés) et maximales (traits pleins), ainsi que le profil du conformateur (en grisé) dans le plan central (i.e., $\beta = 0$).

**Conformateur moyen**

Il est intéressant de considérer un patient de taille moyenne plutôt qu'un patient de taille bien définie pour déterminer le conformateur à utiliser. Il n'est pas toujours possible de disposer d'un conformateur parfaitement adapté à la taille d'un patient. De plus, un patient n'étant pas de section parfaitement elliptique ou encore jamais tout à fait aligné avec le conformateur, il est plus avantageux d'utiliser un conformateur au profil plus moyen.

Le patient moyen se définit comme la moyenne des sections elliptiques des patients de différentes tailles. Les opérations mises en oeuvre pour le calcul du conformateur étant linéaires, le conformateur moyen peut être alors calculé comme la moyenne des conformateurs obtenus pour chacun des patients. Cette approche est plus simple que celle qui consiste à calculer l'atténuation moyenne à travers le patient moyen et d'en déduire le conformateur correspondant. Si *conf(p,i)* est le profil du conformateur correspondant au patient *i*, le profil du conformateur moyen $\overline{conf(p)}$ défini sur les n patients est donné par la relation suivante :

$$\overline{conf}(p) = \frac{1}{n} . \sum_{i=1}^{i=n} conf(p,i) \qquad \textbf{(16)}$$

## Traitement du conformateur dans les mesures d'atténuation

En tomographie d'atténuation, les mesures de flux sont converties en mesures d'atténuation par la relation suivante :

$$\int_D \mu(x).dx = Log\left(\frac{\phi_0}{\phi}\right) \qquad \textbf{(17)}$$

$\phi_0$ est le flux direct émis par la source, $\phi$ le flux atténué le long de la droite $D$ définie par le point source et la cellule élémentaire du détecteur mesurant le flux traversé.

Dans la mesure où $\phi_0$ et $\phi$ sont mesurés dans les mêmes conditions, c'est-à-dire en présence d'un conformateur, il n'y a pas lieu d'effectuer de traitement particulier spécifique à l'utilisation de ce conformateur. En effet, dans l'hypothèse où la réponse du détecteur est linéaire, le rapport $\phi_0 / \phi$ correspond en quelque sorte à une normalisation du flux atténué à un flux direct incident, ce qui élimine la présence du conformateur.

La difficulté peut être par contre la mesure de $\phi_0$ pour laquelle on peut rencontrer des problèmes de saturation du détecteur car l'acquisition de $\phi_0$ est faite sans l'objet. Dans ce cas la mesure de $\phi_0$ peut se faire avec un filtre étalon parfaitement connu, placé devant la source puis retiré au moment des acquisitions de l'objet. Ce filtre se caractérise par son épaisseur x, et la valeur du coefficient d'atténuation linéaire $\mu_f$ du matériau qui le compose à l'énergie utilisée. L'atténuation $a_f$ de ce filtre étalon est donc :

$$a_f = e^{-\mu_f . x_f} \qquad (18)$$

Si $\phi_{0f}$ est la mesure du flux direct à travers ce filtre, le flux direct $\phi_0$ est alors obtenu en appliquant la relation suivante :

$$\phi_0 = \frac{\phi_{0f}}{a_f} \qquad (19)$$

L'atténuation $a_f$ du filtre étalon peut être calculée ou mesurée de manière indépendante. Si $\phi'_0$ est un flux direct inférieur au flux $\phi_0$ pour ne pas saturer le détecteur (i.e. source moins active ou intensité limitée du générateur à rayons X), l'atténuation $a_f$ du filtre étalon est obtenue par l'expression suivante :

$$a_f = \frac{\phi'}{\phi'_0} \qquad (20)$$

où $\phi'$ est le flux mesuré à travers le filtre.

## Approche totalement numérique de calcul d'un conformateur

Les calculs de conformateurs présentés précédemment ne peuvent être effectués que lorsque l'objet est décrit par une expression analytique comme pour un cylindre elliptique homogène. Pour un objet complexe le calcul du conformateur ne peut être que totalement numérique et effectué directement à partir de mesures de transmission. La fonction $l(p,\phi)$ introduite précédemment dans la formule **(1)** n'est donc pas connue. Par contre l'atténuation $e^{-\mu . l(p,\phi)}$ correspond au rapport entre le flux traversé à travers l'objet à l'incidence $\phi$ et pour l'abscisse $p$, sur le flux direct émis soit:

$$\frac{\phi\,(p,\phi)}{\phi_0} = e^{-\mu\,.l(p,\phi)} \qquad\qquad (21)$$

Ce rapport et donc l'intégrale (*1*) peuvent donc être directement calculés à partir des mesures de transmission à travers l'objet. Ensuite, le conformateur adapté à l'atténuation moyenne de l'objet est obtenue en appliquant les expressions (*2*) puis (*3 bis*).

Exemples numériques

On illustre le gain sur les taux de comptage apporté par le conformateur dans le cas d'une géométrie conique avec une source point, et d'une géométrie parallèle avec une source ligne défilante axiale ou radiale. On ne présente pas ici le modèle de calcul de ces taux de comptage mais on donne simplement à titre de comparaison les taux de comptage obtenus avec et sans conformateur pour chacune des géométries.

On considère un détecteur grand champ de 50 cm x40 cm. Seule la surface utile du détecteur est irradiée par la source de transmission : un masque de plomb est supposé masquer le reste de la caméra. La grande dimension du détecteur est placée suivant la largeur du patient. On suppose parfait le collimateur secondaire ainsi que le collimateur primaire utilisé en géométrie parallèle. Le patient est modélisé par un cylindre elliptique infini et homogène de rayons maximum 19 cm et 13 cm. Le conformateur est calculé pour une variation possible de 25 % de la taille du patient par rapport à la taille maximale. Le conformateur ainsi défini est donc la moyenne des conformateurs obtenus pour des patients dont la taille varie de 14.25 cm et 9.75 cm jusqu'à la taille nominale. L'atténuation du cylindre est celle de l'eau à l'énergie du pic principal du cobalt 57 (122 kev) soit 0,159 cm$^{-1}$. Les durées des acquisitions en émission et en transmission sont identiques et égales à 30 secondes.

Les tableaux suivants donnent les taux de comptage minimum, moyen et maximum sans rayonnement diffusé, obtenus avec le patient de taille maximale pour une configuration sans et avec conformateur. On donne également l'activité correspondante de la source et les taux de comptage en plein flux obtenus en retirant le patient. La source est dimensionnée pour obtenir la statistique nécessaire en transmission avec un temps d'acquisition de 30 secondes à savoir 59 photons reçus en moyenne par pixel. On donne aussi les nombres de photons maximum, minimum et moyens reçus par pixel.

**Géométrie conique**

La distance source-détecteur est de 125 cm. La distance de la source à l'axe de rotation est de 10 cm. La surface utile du détecteur est de 50 cm par 25 cm.

|  | Sans conformateur | Avec conformateur |
|---|---|---|
| Activité de la source | 2 mCi | 2 mCi |
| Taux de comptage : |  |  |
| maximum | 340000 | 4150 |
| minimum | 290000 | 3900 |
| moyen | 310000 | 4000 |
| Taux de comptage plein flux | 464000 | 58000 |
| Photons comptés par pixel : |  |  |
| maximum | 6800 | 72 |
| minimum | 59 | 16 |
| moyen | 4550 | 59 |

**Géométrie parallèle**

La distance source-détecteur est de 51 cm. La surface utile du détecteur est de 40 cm x 20 cm. La surface d'éclairement sur le détecteur d'un point de la source ligne, définie par la largeur totale à mi-hauteur (LTMH) du collimateur secondaire, est de 2.667 x 2.667 cm². La rapport 29 entre les activités nécessaires en géométries parallèle et conique se retrouve avec l'expression suivante :

$$\frac{Surface\ d'éclairement\ en\ conique}{Surface\ d'éclairement\ en\ parallèle} \cdot \left(\frac{Distance\ source\ ligne\text{-}détecteur}{Distance\ source\ point\text{-}détecteur}\right)^2 =$$

$$\frac{50.25}{2.667\ .\ 2.667} \cdot \left(\frac{51}{125}\right)^2$$

• *Avec balayage axial*

|  | Sans conformateur | Avec conformateur |
|---|---|---|
| Activité de la source | 58 mCi | 58 mCi |
| Taux de comptage : |  |  |
| maximum | 172000 | 4500 |
| minimum | 54000 | 3650 |
| moyen | 109000 | 4000 |
| Taux de comptage plein flux | 464000 | 180000 |
| Photons comptés par pixel : |  |  |
| maximum | 6775 | 103 |
| minimum | 59 | 23 |
| moyen | 1600 | 59 |

• *Avec balayage radial*

|  | Sans conformateur | Avec conformateur |
|---|---|---|
| Activité de la source | 58 mCi | 58 mCi |
| Taux de comptage : |  |  |
| maximum | 464000 | 11900 |
| minimum | 1100 | 800 |
| moyen | 109000 | 4000 |
| Taux de comptage plein flux | 464000 | 464000 |
| Photons comptés par pixel : |  |  |
| maximum | 6775 | 103 |
| minimum | 59 | 23 |
| moyen | 1600 | 59 |

Mode de réalisation de l'invention

**Géométrie parallèle avec balayage axial de la source ligne**

• *Avec structure atténuante*

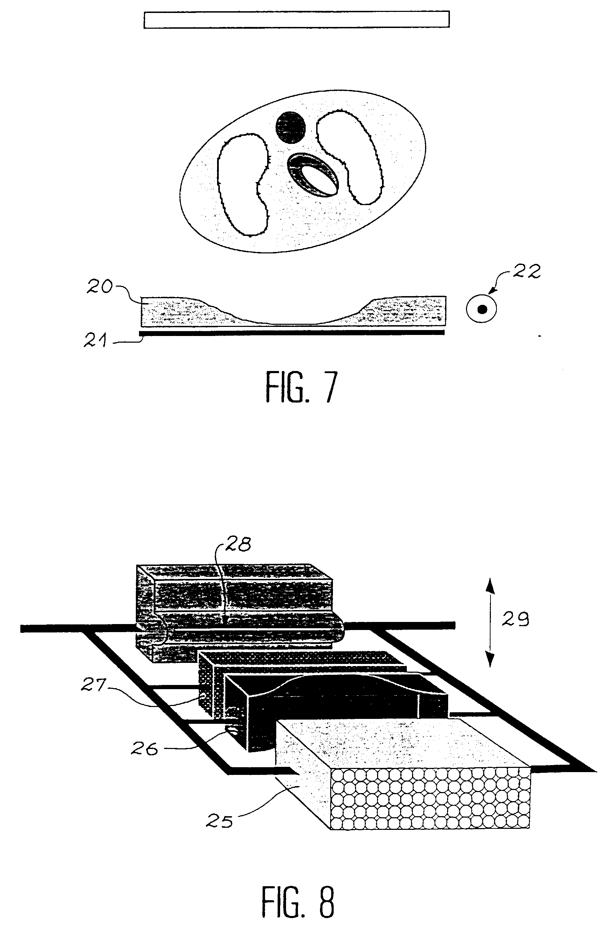

Le conformateur est invariant au cours du balayage. La figure 7 présente un conformateur fin pour un balayage axial de la source. La hauteur du conformateur couvre uniquement la largeur du faisceau de la source ligne. Le conformateur peut être usiné par fraisage dans une pièce de cuivre. L'usinage suit le profil défini par une suite de valeurs numériques représentant l'épaisseur de cuivre.

Cette figure 7 illustre le principe du conformateur statique 20 pour source ligne 21 défilante avec balayage axial 22, avec un détecteur 23.

La figure 8 illustre un ensemble source ligne défilante pour un balayage axial. Sur cette figure sont représentés un collimateur primaire 25, un conformateur 26, un filtre 27, un ensemble source 28, avec un mouvement vertical 29.

• *Avec activité variable*

Une évolution très avantageuse du procédé de l'invention est l'utilisation d'une source dont le profil d'activité est directement défini à partir de l'expression du filtre. Le profil de l'activité peut être obtenu avec un tube profilé à section variable : le profil du diamètre du tube est alors déterminé pour produire le profil souhaité de l'activité.

Soit *conf(p)* le profil du conformateur, c'est-à-dire le profil de la structure atténuante à placer devant une source ligne homogène pour obtenir un profil d'émission variable. Le calcul de *conf(p)* a été développé précédemment. $R$ est le rayon de la ligne source homogène contenant l'élément émetteur. $R$ est fonction de l'activité nécessaire et de l'activité spécifique de la solution émettrice. Le profil de flux recherché $\phi(p)$ est donné par la relation suivante :

$$\phi(p) = a.\pi.R^2.e^{-\mu_{conf}.conf(p)} = a.\pi.r(p)^2 \tag{22}$$

ou $\mu_{conf}$ est le coefficient d'atténuation linéaire du conformateur. L'expression du rayon d'une source d'activité variable équivalente est donc donnée par l'expression suivante:

$$r(p) = R.\sqrt{e^{-\mu_{conf}.conf(p)}} \tag{23}$$

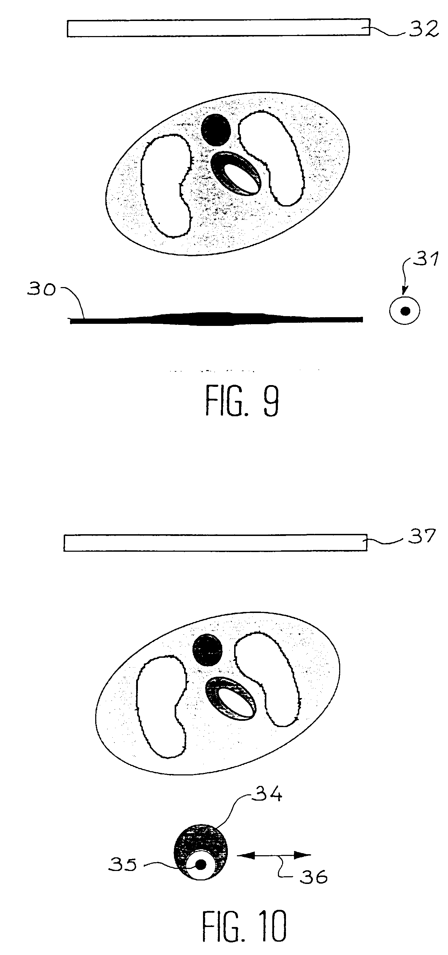

La figure 9 illustre le principe d'une source ligne défilante à profil d'activité variable 30 pour balayage axial 31, avec un détecteur 32.

**Géométrie parallèle avec balayage radial d'une source ligne**

La mise en oeuvre d'un conformateur pour ligne source défilante avec balayage radial est plus complexe. Il n'est pas toujours possible d'utiliser un conformateur 2D pour des raisons évidentes de poids et d'encombrement. La solution est donc d'utiliser un conformateur variable à partir d'un système rotatif, par exemple. On parle dans ce cas de conformateur dynamique. La hauteur du conformateur couvre toute la hauteur de balayage. Il n'est évidemment pas possible ici d'utiliser une source d'activité variable dynamiquement équivalente.

L'atténuation de cet atténuateur doit être en tout point l'atténuation du conformateur 2D équivalent. Un tel conformateur dynamique est défini par une description en coordonnées polaires du conformateur statique calculé en coordonnées cartésiennes.

La figure 10 illustre le principe d'un conformateur dynamique 34 pour source ligne défilante avec balayage 35 radial 36 avec un détecteur 37.

• *Source placée à l'extérieur du conformateur dynamique*

Le conformateur dynamique est fixé sur un axe lui permettant de tourner devant la source ligne. En reprenant les rotations précédentes, le conformateur dynamique est défini par le système d'équations suivant:

$$\begin{cases} x(p) = conf(p).\cos\left(\dfrac{\pi}{L_p}.p\right) \\ y(p) = conf(p).\sin\left(\dfrac{\pi}{L_p}.p\right) \end{cases} \quad avec \quad p \in \left[-\dfrac{L_p}{2}, \dfrac{L_p}{2}\right] \qquad \textbf{(24)}$$

Le système ci-dessus conduit à un demi "noeud papillon" alors que la variante suivante conduit à une forme en "noeud papillon" complet :

$$\begin{cases} x(p) = \dfrac{1}{2}.conf(p).\cos\left(\dfrac{\pi}{L_p}.p\right) \\ y(p) = \dfrac{1}{2}.conf(p).\sin\left(\dfrac{\pi}{L_p}.p\right) \end{cases} \quad avec \quad p \in \left[-L_p, L_p\right] \qquad \textbf{(25)}$$

Le balayage de la source correspond à une rotation de 180 degrés de ce conformateur dynamique ainsi défini.

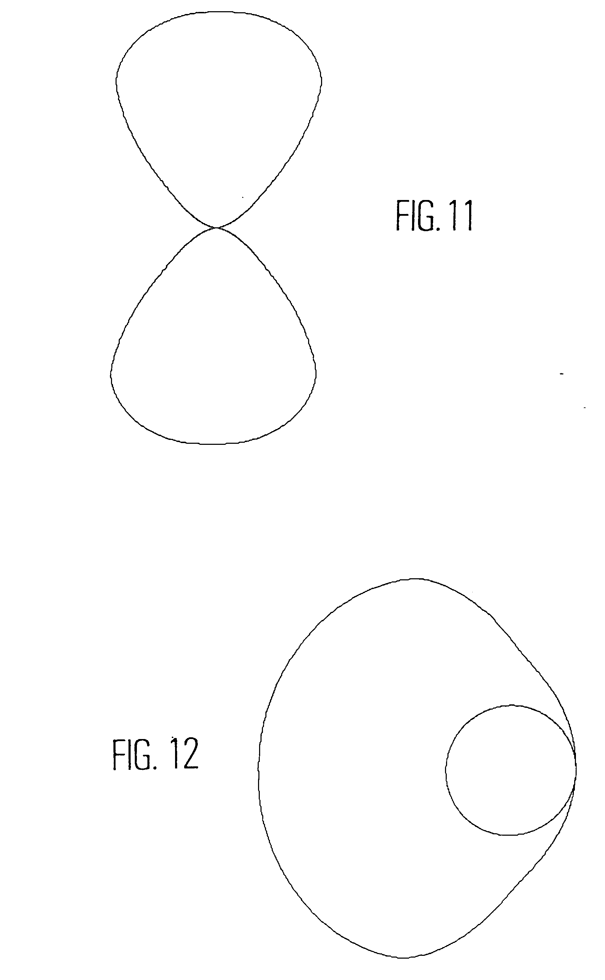

La figure 11 illustre le profil du conformateur dynamique placé devant la source, pour un objet elliptique.

• *Source placée à l'intérieur du conformateur dynamique*

La source est placée à l'intérieur du conformateur dynamique, fixée au niveau de son axe de révolution. Le conformateur tourne autour de la source ligne. On note $R_0$ le rayon intérieur du conformateur. L'axe de la source correspond à l'axe de rotation du conformateur. En reprenant les notations précédentes, le conformateur dynamique est défini par les systèmes d'équations suivants :

Cercle intérieur :
$$\begin{cases} x(p) = R_0.\cos\left(\dfrac{2\pi}{L_p}.p\right) \\ y(p) = R_0.\sin\left(\dfrac{\pi}{L_p}.p\right) \end{cases} \quad avec \quad p \in \left[-\dfrac{L_p}{2}, \dfrac{L_p}{2}\right] \qquad \textbf{(26)}$$

Profil extérieur :
$$\begin{cases} x(p) = \left(R_0 + conf(p)\right).\cos\left(\dfrac{2\pi}{L_p}.p\right) \\ y(p) = \left(R_0 + conf(p)\right).\sin\left(\dfrac{2\pi}{L_p}.p\right) \end{cases} \qquad \textbf{(27)}$$

Le balayage de la source correspond à une rotation de 360 degrés du conformateur dynamique ainsi défini. Il est possible de définir des variantes pour lesquelles le balayage de la source correspond à une rotation différente du conformateur, sur 180 degrés par exemple.

La figure 12 illustre un profil d'un conformateur dont le balayage de la source correspond à une rotation du conformateur de 360 degrés pour un objet elliptique.

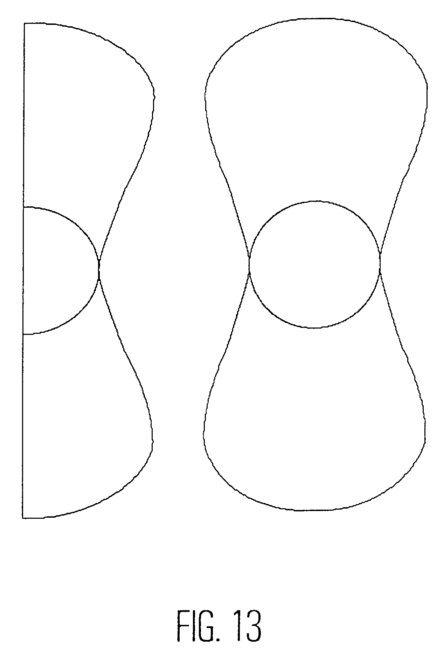

La figure 13 illustre des profils de conformateurs dynamiques pour un objet elliptique dont le balayage de la source correspond à une rotation du conformateur de 180 degrés. Celui de droite permet une rotation continue.

**Géométrie conique avec source point fixe**

Un conformateur pour géométrie conique et source ponctuelle ne peut évidemment qu'être statique. Il s'agit d'une structure atténuante fixe aux dimensions réduites que l'on place devant la source point. Le profil de cette structure a été présenté précédemment. Il n'est bien entendu plus question ici de source à activité variable.

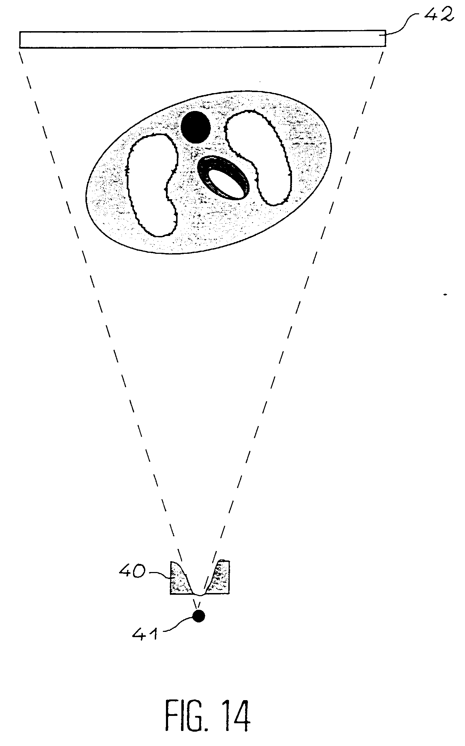

La figure 14 illustre le principe d'un conformateur 40 statique pour source point 41, avec un détecteur 42.

Avantages particuliers apportés par l'invention

Le principal avantage de cette invention est de limiter la dynamique des mesures en transmission du détecteur avec un système relativement simple et très économique. Ceci peut éviter d'avoir à utiliser un détecteur très sophistiqué comme une gamma caméra numérique acceptant des taux de comptage plus élevés dans le cas de la médecine nucléaire. Ceci peut également éviter de saturer un tube intensificateur utilisé comme détecteur dans le cas de la radiologie 3D.

En imagerie SPECT corrigée en atténuation pour la médecine nucléaire, ce conformateur permet de limiter les taux de comptage en transmission de la caméra, ce qui diminue au maximum les pertes de comptage. Le fonctionnement de la caméra est linéaire et il devient possible d'effectuer simultanément les acquisitions d'émission et d'atténuation sans dégrader la statistique en émission (i.e., sans pertes de comptage en émission).

L'utilisation d'un conformateur améliore la qualité des images reconstruites. Les pertes de comptage et saturations d'écran conduisent à une surestimation de la densité en périphérie des objets reconstruits. Il apparaît en particulier des valeurs non nulles de densité en dehors de l'objet, comparables aux phénomènes de projections tronquées rencontrés en tomographie. Ces valeurs non nulles gênent entre autre beaucoup les algorithmes de correction de ces projections tronquées. En ce sens l'utilisation d'un conformateur améliore la qualité des images reconstruites en évitant une part cette surestimation de la densité en périphérie de l'objet en en facilitant d'autre part la correction des projections dans le cas de projections tronquées.

Le profil du conformateur tel que défini précédemment permet d'obtenir une statistique uniforme sur l'ensemble des mesures de transmission et donc sur le volume reconstruit, ce que ne pourrait pas faire facilement un obturateur fonctionnant en tout ou rien.

Si on ne recherche plus à tout prix des taux de comptage très bas mais une durée minimale des acquisitions en transmission, un tel conformateur permet l'utilisation de sources beaucoup plus actives en repoussant les risques de saturer la caméra.

Le conformateur est placé entre la source et le patient. En atténuant les rayonnements émis suivant les directions de moindre atténuation, le conformateur réduit la dose reçue par le patient.

Le profil du conformateur peut être adapté à la morphologie moyenne des patients tout en restant très performant. Ceci évite d'avoir à changer de conformateur avec la taille du patient.

La forme du conformateur peut être très douce, ce qui facilite l'étalonnage et la calibration de l'instrument en limitant au maximum les effets de masse partielle, par opposition à un obturateur fonctionnant en tout ou rien.

La mise en oeuvre du conformateur pour balayage axial est très simple et donc peu coûteuse. Dans ce cas, l'utilisation d'une source d'activité variable déterminée à partir du profil de ce conformateur permet une économie importante d'activité: économie financière et allégement des consignes de sécurité.

La mise en oeuvre du conformateur pour un balayage radial est plus complexe tout en étant moins efficace pour ce qui concerne les taux de comptage. Néanmoins le sens de balayage peut être imposé pour d'autres raisons comme les contraintes liées à la mécanique par exemple. Dans ce cas le conformateur dynamique proposé répond tout à fait au problème posé.

Dans le cas d'un balayage radial, une gestion de la position du conformateur dynamique asservie soit à la position du patient, soit au taux de comptage pour une gamma caméra, ou au flux reçu pour un détecteur X, permet de définir un conformateur qui suit parfaitement le profil d'atténuation du patient.

Le procédé de l'invention est applicable à toute forme d'objet dans la mesure où il repose soit sur la notion d'objet moyen à symétrie de révolution pour un conformateur fixe, soit sur le complément de l'objet pour chacune des incidences dans le cas d'un conformateur dynamique. Dans le cas général d'un objet complexe, le calcul du conformateur moyen ou dynamique est effectué de manière totalement numérique à partir des mesures de transmission de l'objet. La réalisation d'un conformateur moyen est simple et envisageable pour tous les objets. La réalisation d'un conformateur dynamique parfaitement adapté à un objet est plus délicate. Dans la pratique on peut combiner les vitesses de déplacement et de rotation du conformateur pour assurer une statistique uniforme sur le détecteur.

Par exemple, dans le cas où on a un objet (ou un patient) très atténuant au centre et moins sur les bords, il peut être intéressant d'utiliser une source moins active (donc moins chère) et un conformateur parfaitement adapté à la seule région centrale.

Cela implique alors que l'atténuation sur l'ensemble des acquisitions n'est pas constante et le profil de flux n'est pas uniforme sur tout le détecteur.

La vitesse de balayage pourra alors être adaptée de manière à conserver la statistique de comptage uniforme: la loi de la dynamique de la vitesse est inversement proportionnelle au nombre de photons comptés. Ainsi le temps d'exposition peut être adapté au profil du flux qui arrive sur le détecteur. En reprenant l'exemple précédemment cité, la vitesse de balayage sera plus lente au centre que sur les bords de l'objet.

**Revendications**

1. Procédé de réalisation d'un conformateur de flux pour acquérir des images en transmission d'un objet, procédé robuste aux variations de forme et/ou d'atténuation de l'objet, caractérisé en ce que la forme et/ou l'atténuation de l'objet est décrite par un modèle paramétrique et en ce que les caractéristiques du conformateur sont calculées à partir du profil complémentaire à un profil moyen obtenu soit en faisant la moyenne des profils suivant différentes incidences angulaires du modèle, soit en faisant la moyenne des profils obtenus suivant différentes incidences angulaires sur une famille de modèles de formes et/ou d'atténuations différentes.

2. Procédé selon la revendication 1, caractérisé en ce que on calcule les caractéristiques du conformateur en tout point i de tout ou partie du profil par la relation $\mu_i x_i = \ln(\phi_i / \phi_{min})$, $\mu_i$ étant le coefficient linéaire d'atténuation du conformateur, $x_i$ l'épaisseur du conformateur, $\phi_i$ la valeur du flux transmis à travers l'objet et $\phi_{min}$ la valeur minimale du flux $\phi_i$ émis par la source.

3. Procédé selon l'une quelconque des revendications précédentes, caractérisé en ce qu'il est utilisé dans le domaine de l'imagerie médicale.

4. Procédé selon l'une quelconque des revendications 1 ou 2, caractérisé en ce qu'il est utilisé dans le domaine du contrôle industriel.

5. Procédé selon l'une quelconque des revendications 3 ou 4, caractérisé en ce qu'il est utilisé dans le domaine de la tomographie d'atténuation.

6. Procédé selon la revendication 1, caractérisé en ce que le conformateur n'est adapté que sur une partie, et en ce que la vitesse de balayage est adaptée de manière à conserver la statistique de comptage uniforme.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

**EP 0 751 485 A1**

Office européen
des brevets

**RAPPORT DE RECHERCHE EUROPEENNE**

Numero de la demande

EP 96 40 1424

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| P,Y | US 5 473 663 A (HSIEH JIANG) 5 Décembre 1995 <br> * colonne 2, ligne 51 - ligne 60 * <br> * colonne 5, ligne 65 - colonne 6, ligne 6 * <br> * revendications 2,3 * <br> --- | 1,3-5 | G06T11/00 |
| Y | EP 0 544 507 A (GEN ELECTRIC) 2 Juin 1993 <br> * page 3, ligne 20 - ligne 25 * <br> * page 4, ligne 33 - ligne 37; figures 1,4 * <br> --- | 1,3-5 | |
| A | US 5 376 795 A (HASEGAWA BRUCE H ET AL) 27 Décembre 1994 <br> * revendication 9 * <br> * colonne 6, ligne 3 - ligne 15 * <br> --- | 1-6 | |
| A | EP 0 526 970 A (PICKER INT INC ;UNIV UTAH (US)) 10 Février 1993 <br> * page 2, ligne 38 - page 3, ligne 9 * <br> --- | 1-7 | |
| A | SYSTEMS AND COMPUTERS IN JAPAN, MARCH 1994, USA, <br> vol. 25, no. 3, ISSN 0882-1666, <br> pages 68-77, XP000476438 <br> TSURUNO R ET AL: "Computer design system of compensating filter for radiography treatment" <br> * alinéa 3 * <br> --- | 1-9 | **DOMAINES TECHNIQUES RECHERCHES (Int.Cl.6)** <br><br> G06T |
| A | WO 91 00048 A (KAPLAN H CHARLES) 10 Janvier 1991 <br> ----- | | |

Le présent rapport a été établi pour toutes les revendications

| Lieu de la recherche | Date d'achèvement de la recherche | Examinateur |
|---|---|---|
| LA HAYE | 6 Septembre 1996 | Perez Molina, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)